# EUROPÄISCHE PATENTANMELDUNG

(11) **EP 2 793 363 A1**
(43) Veröffentlichungstag der Anmeldung: **22.10.2014**
(21) Anmeldenummer: 13163926.2
(22) Anmeldetag: 16.04.2013
(51) Int. Cl.: H02K 1/27

(54) **Einzelsegmentläufer mit Halteringen**

(71) Anmelder: Siemens Aktiengesellschaft, 80333 München (DE)
(72) Erfinder: Pannier, Lars, 97616 Bad Neustadt a.d. Saale (DE); Pawellek, Jürgen, 97618 Unsleben (DE); Volkmuth, Benjamin, 97717 Sulzthal (DE); Vollmer, Rolf, 36129 Gersfeld (DE); Waider, Sebastian, 36100 Petersberg (DE)

(57) **Zusammenfassung**

Es soll ein Einzelsegmentläufer vorgeschlagen werden, der einfach aufzubauen und für die Serienfertigung geeignet ist. Daher wird ein Einzelsegmentläufer mit mehreren sternförmig angeordneten Blechpaketsegmenten (2) und jeweils einem Permanentmagneten (1) zwischen zwei benachbarten der Blechpaketsegmente (2) bereitgestellt, wodurch eine hohlzylindrische Anordnung der Blechpaketsegmente und der Permanentmagnete gegeben ist. Die Blechpaketsegmente weisen jeweils eine Vielzahl an Einzelblechen auf, welche fest miteinander verbunden sind. Die hohlzylindrische Anordnung weist an beiden Außenrändern jeweils eine Nut auf, in welche ein Ring (11) zur Fixierung der Anordnung eingefügt ist.

## Beschreibung

Die vorliegende Erfindung betrifft einen Einzelsegmentläufer mit mehreren sternförmig angeordneten Blechpaketsegmenten, wobei die Blechpaketsegmente jeweils eine Vielzahl an Einzelblechen aufweisen, welche fest miteinander verbunden sind, und mit jeweils einem Permanentmagneten zwischen zwei benachbarten der Blechpaketsegmente, wodurch eine hohlzylindrische Anordnung der Blechpaketsegmente und der Permanentmagnete gegeben ist.

Die Rotoren von Elektromotoren und Generatoren können als Einzelsegmentläufer aufgebaut werden. Dabei sind die Permanentmagnete sternförmig um die Welle angeordnet und in den Zwischenräumen zwischen jeweils zwei benachbarten Permanentmagneten befindet sich jeweils ein Blechpaketsegment.

Es wird angestrebt, einen solchen Elektromotor oder Generator mit Magneten in Flusskonzentration möglichst streuarm aufzubauen. Außerdem sollen der Aufbau und die Fertigung für eine Serienproduktion geeignet sein. Gegebenenfalls soll der Rotor auch magnetisch und mechanisch konzentrisch und symmetrisch zum Stator aufgebaut sein. Dabei wäre es günstig, wenn das Luftspaltvolumen zwischen rotierenden und stehenden Teilen möglichst gering ist.

Es ist bekannt (vgl. die nachveröffentlichte europäische Patentanmeldung EP 12 159 917.9) zur Aufnahme der Zentrifugalkräfte der Blechpaketsegmente und der Permanentmagnete eine Bandage zu verwenden, die über die ganze Aktivteillänge des Rotors verläuft. Die bezüglich des Luftspalts wirksamen Toleranzen werden durch Einzelteiltoleranzen und durch die Materialstärke der Bandage bedingt groß ausfallen. Speziell ist bei diesem Aufbau der Außendurchmesser über eine Toleranzkette von vier Bauteilen definiert (Polygonwelle, Magnet, Blechsegment und Bandage). Die Bandage selbst vergrößert den Spalt zwischen Rotor und Stator.

Die Aufgabe der vorliegenden Erfindung besteht somit darin, einen Einzelsegmentläufer bereitzustellen, der einfach herstellbar ist und ein vermindertes Luftspaltvolumen ermöglicht.

Erfindungsgemäß wird diese Aufgabe gelöst durch einen Einzelsegmentläufer mit mehreren sternförmig angeordneten Blechpaketsegmenten, wobei die Blechpaketsegmente jeweils eine Vielzahl an Einzelblechen aufweisen, welche fest miteinander verbunden sind, und mit jeweils einem Permanentmagneten zwischen zwei benachbarten der Blechpaketsegmente, wodurch eine hohlzylindrische Anordnung der Blechpaketsegmente und der Permanentmagnete gegeben ist, wobei die hohlzylindrische Anordnung an beiden Außenrändern jeweils eine Nut aufweist, und in jede Nut ein Ring zur Fixierung der Anordnung eingefügt ist.

In vorteilhafter Weise weist der Einzelsegmentläufer also an beiden Außenrändern jeweils eine Nut auf, in die je ein Ring zur Fixierung der Anordnung eingefügt ist. Damit ist eine einfache Fixierung der Anordnung durch die Ringe möglich und der Luftspalt kann im Mittel dadurch vermindert werden, dass die Ringe zur Fixierung nur am Rand vorgesehen sind.

Vorzugsweise ist die ringförmige Anordnung der Blechpaketsegmente und Permanentmagnete in ihrem Inneren durch eine Innenhülse abgestützt. Durch die Innenhülse innen und die Ringe außen entsteht somit eine stabile ringförmige bzw. hohlzylindrische Anordnung.

Die Innenhülse sollte aus einem "magnetischen" Material (Permeabilitätszahl µᵣ kleiner 5) bestehen. Damit wird ein magnetischer Kurzschluss zwischen benachbarten Permanentmagneten praktisch unterbunden wird.

Die Einzelbleche jedes Blechpaketsegments können durch Schweißen, Hartlöten oder Kleben miteinander verbunden sein. Grundsätzlich können sie aber auch auf jede andere Art und Weise stoff-, form- oder kraftschlüssig miteinander verbunden sein. Die speziell genannten Techniken erleichtern jedoch eine Serienproduktion.

Darüber hinaus können die Einzelbleche jedes Blechpaketsegments stanzpaketiert sein. Dabei werden die Bleche bereits beim Stanzen aufeinander paketiert. Hierdurch lässt sich der Automatisierungsgrad erhöhen.

Die Anordnung der Blechpaketsegmente und Permanentmagnete kann am Außenmantel in ihrer axialen Mitte ebenfalls eine Nut aufweisen, in die ein weiterer Ring eingebracht ist. Damit kann eine zusätzliche Stabilisierung geschaffen werden, wenn der Einzelsegmentläufer axial verhältnismäßig lang ist.

Ferner kann axial anschließend an die Anordnung und koaxial mit dieser eine weitere gleichartige, ebenfalls mit Ringen fixierte Anordnung von Blechpaketsegmenten und Permanentmagneten angeordnet sein, wobei in die Nuten, die von beiden Anordnungen aneinander angrenzen, ein gemeinsamer, einteiliger Ring eingefügt ist. Der gemeinsame Ring hat dann nicht nur die Funktion, die Komponenten der Anordnung radial zu fixieren, sondern auch die Funktion, die beiden Anordnungen axial aneinander zu befestigen.

Die Blechpaketsegmente und Permanentmagnete der Anordnung können außerdem miteinander verklebt und zusammen auf eine Welle geklebt sein. Durch das Verkleben ist eine in sich stabile Anordnung gewonnen.

Gemäß einer weiteren Ausgestaltung liegen nur die Ringe auf allen Permanentmagneten der Anordnung auf. Dies hat den Vorteil, dass eine definierte Kraft in radialer Richtung auf alle Permanentmagnete ausgeübt werden kann.

Des Weiteren können die Blechpaketsegmente der Anordnung formschlüssig gegen ihre Zentrifugalkraft an den Permanentmagneten gehalten sein. Während also die Permanentmagnete durch die Ringe in radialer Richtung gehalten werden, werden die Blechpaketsegmente an den Permanentmagneten in radialer Richtung abgestützt. Diese Abstützung beeinflusst nicht die Haltekraft, die durch die Ringe auf die Permanentmagneten ausgeübt wird.

Dabei kann jedes Blechpaketsegment einen teilweise oder sich über die gesamte axiale Länge der Anordnung erstreckenden Fuß aufweisen, der zu seiner Unterseite hin an Breite zunimmt, wobei mindestens einer der angrenzenden Permanentmagnete unter Bildung des Formschlusses auf den Fuß drückt. Durch den nach unten (d. h. zur Achse des Läufers hin) sich verbreiternden Fuß wird also die Zentrifugalkraft des jeweiligen Blechpaketsegments auf den benachbarten Permanentmagneten übertragen. Das Blechpaketsegment ist damit ausreichend radial nach außen fixiert.

Die vorliegende Erfindung wird nun anhand der beigefügten Zeichnungen näher erläutert, in denen zeigen:
- FIG 1: eine perspektivische Ansicht einer Anordnung von Blechpaketsegmenten und Permanentmagneten eines Einzelsegmentläufers;
- FIG 2: die Anordnung von FIG 1 montiert auf eine Welle;
- FIG 3: die Vorrichtung von FIG 2 mit aufgebrachten Bandageringen;
- FIG 4: eine Querschnittsansicht des Einzelsegmentläufers von FIG 3;
- FIG 5: eine vergrößerte Ansicht eines Außenbereichs des Querschnitts von FIG 4 und
- FIG 6: eine vergrößerte Ansicht eines Innenabschnitts des Querschnitts von FIG 4.

Die nachfolgend näher geschilderten Ausführungsbeispiele stellen bevorzugte Ausführungsformen der vorliegenden Erfindung dar.

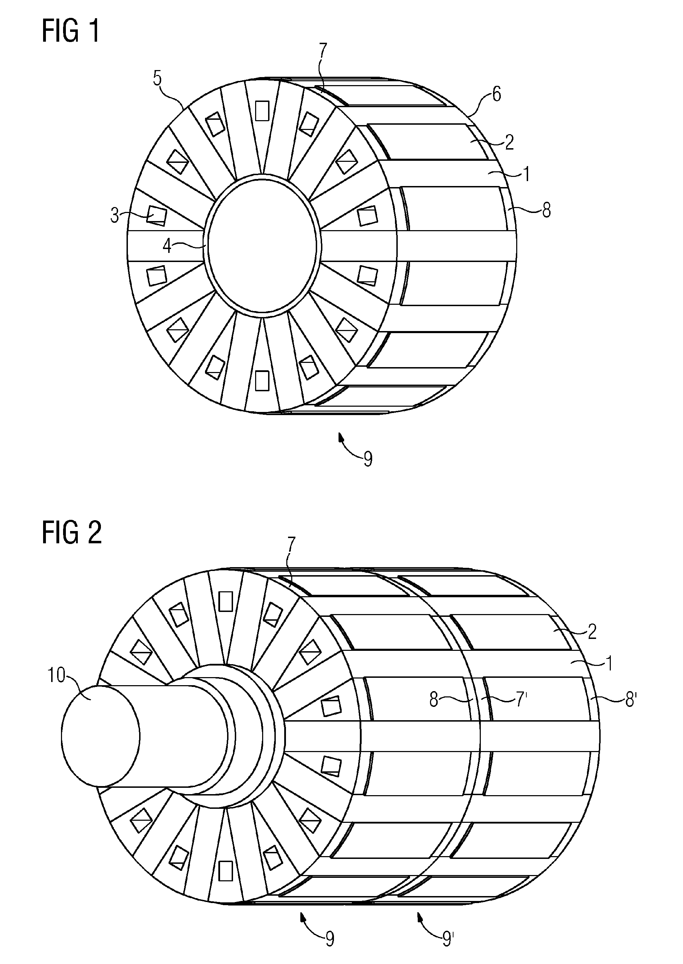

In FIG 1 ist ein Einzelsegmentläufer vor der Fertigstellung dargestellt. Der Einzelsegmentläufer besitzt eine Anordnung von Permanentmagneten 1, die sternförmig bezogen auf die Achse des Einzelsegmentläufers angeordnet sind, und Blechpaketsegmenten 2, die in den Zwischenräumen von jeweils zwei Permanentmagneten 1 angeordnet sind. Dadurch, dass jeder Permanentmagnet 1 plattenförmig bzw. quaderförmig ausgebildet ist, ergeben sich zwischen den Permanentmagneten 1 segmentartige Abschnitte, die durch die Blechpaketsegmente 2 ausgefüllt sind.

Die Blechpaketsegmente bestehen jeweils aus einem Paket von Einzelblechen, die durch axiale Verbindungselemente 3 miteinander verbunden sind.

Die Anordnung aus Blechpaketsegmenten 2 und Permanentmagneten 1 ist hohlzylindrisch bzw. ringförmig und besitzt in ihrem Inneren eine Innenhülse 4, auf die sich die Anordnung radial abstützt.

Weiterhin besitzt die ringförmige Anordnung aus den Permanentmagneten 1 und den Blechpaketsegmenten 2 zwei Außenkanten 5 und 6, die jeweils eine Kante zwischen Mantelfläche und betreffender Stirnseite bilden. Entlang jeder Außenkante ist in der Mantelfläche der ringförmigen Anordnung eine Nut 7, 8 eingebracht.

Das in FIG 1 dargestellte Zwischenprodukt kann als Modul gesehen werden, wobei mit einem oder mehreren derartigen Modulen ein Einzelsegmentläufer aufgebaut sein kann. In dem Beispiel von FIG 2 sind zwei derartige Module 9, 9' axial hintereinander auf einer Welle 10 angeordnet. Die beiden Module 9, 9' befinden sich also koaxial auf der Welle 10. Die beiden Module 9 und 9' sind baugleich.

Die Nut 8 am rechten Rand des linken Moduls 9 grenzt unmittelbar an die linke Nut 7' des rechten Moduls 9'. Damit bilden die beiden Nuten 8 und 7' eine ineinander übergehende breite Nut.

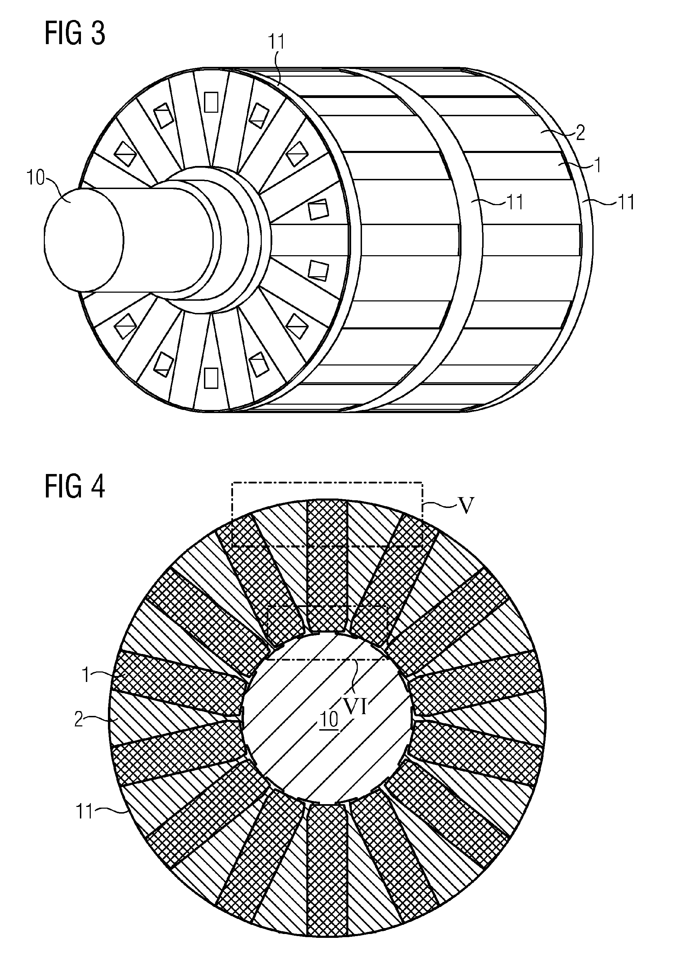

Gemäß FIG 3 sind in die Nuten 7, 8 mit 7' und 8' Bandageringe (kurz Ringe 11) eingefügt, die die Anordnungen aus Permanentmagneten 1 und Blechpaketsegmenten 2 radial gegen die Zentrifugalkraft halten. Der Ring 11 in der breiten Nut 8, 7' ist entsprechend breiter als die Ringe in den Nuten 7 und 8'.

Gegebenenfalls kann die Anordnung von Permanentmagneten 1 und Blechpaketsegmenten 2 auch nichtmodular aufgebaut sein, nämlich mit entsprechend langen Permanentmagneten 1 und ebenso langen Blechsegmentpaketen 2. Auch in diesem Fall ist es unter Umständen günstig, in der axialen Mitte der Anordnung eine Nut vorzusehen und in diese einen Bandagering einzufügen, um den Einzelsegmentläufer also in der Mitte besser zu stabilisieren.

Ein streuungsarmer Aufbau des Einzelsegmentläufers wird erreicht, indem die Blechpaketsegmente 2, die den magnetischen Fluss eines Poles sammeln, keine weichmagnetische Verbindung zu den Flusssammlern anderer Pole haben und die Magnete 1 an der der Welle 10 zugewandten Seite eng positioniert werden (also an der Innenhülse 4 minimal beabstandet sind), wodurch sich ein quasi sternförmiger Aufbau ergibt. Die konzentrisch symmetrische Position der Magnetpole auf dem Rotor wird durch eine Verklebung der Magnete 1 mit der Welle 10 und den Blechpaketsegmenten 2 mit toleranzausgleichendem Klebstoff erreicht.

Zur Aufnahme der Zentrifugalkräfte dienen die ringförmigen Bandageelemente bzw. -ringe 11, die sich nicht über die gesamte Aktivteillänge (axiale Gesamterstreckung des Einzelsegmentläufers) erstrecken. Die Ringe 11 befinden sich, wie erwähnt, in den Nuten 7, 8, 7', 8' am Umfang der Anordnung.

Die weichmagnetischen Blechpaketsegmente 2 zur Flusssammlung bestehen aus Einzelblechen, die axial stoff- form- oder kraftschlüssig miteinander verbunden sind. Besonders geeignet sind kleine Schweiß- oder Hartlotnähte, Stanzpaketierungen, Klebungen oder Pressungen.

Zur Reduzierung der Streuung kann die Innenhülse 4, die vorzugsweise aus einem amagnetischen Material (Permeabilitätszahl µᵣ kleiner 5) besteht, vorgesehen sein. Mit dieser Innenhülse 4 ergibt sich zudem die Möglichkeit der axialen Staffelung der Module und der einfachen Montage.

Mit dem in den Ringnuten 7, 8; 7', 8' verlaufenden ringförmigen Bandageelementen (Ringe 11), die axial kürzer als die Aktivteillänge sind (< 50%), kann ein kleiner mittlerer Luftspalt realisiert werden. Damit ergibt sich eine höhere Induktion und somit ein höheres Drehmoment oder eine kürzere Baulänge des Einzelsegmentläufers.

Durch die Klebung der Magnete mit den Segmenten und die Klebung der Magnete auf der Welle mit toleranzausgleichenden Klebstoffen ist eine einfache Fertigung und eine hohe Genauigkeit für Konzentrizität und Polsymmetrie gegeben, wodurch Pendeldrehmomente, Geräuschentwicklung und Schwingungsanregung reduziert werden. Eine weitere Reduzierung der Pendeldrehmomente kann bei modularem Aufbau des Einzelsegmentläufers dadurch erreicht werden, dass die einzelnen Module untereinander um einen gewissen Winkel gedreht sind.

Die FIG 4 bis 6 beziehen sich auf eine weitere Ausführungsform der vorliegenden Erfindung. Der Querschnitt von FIG 4 durch den Einzelsegmentläufer zeigt die sternförmig angeordneten Permanentmagnete 1 mit der Welle 10 in der Mitte. Zwischen den Permanentmagneten 1 befinden sich die Blechpakete 2. Die Anordnung der Permanentmagnete 1 und der Blechpaketsegmente 2 ist von einem Ring 11 umgeben. In perspektivischer Ansicht kann der Einzelsegmentläufer wie derjenige von FIG 3 aussehen.

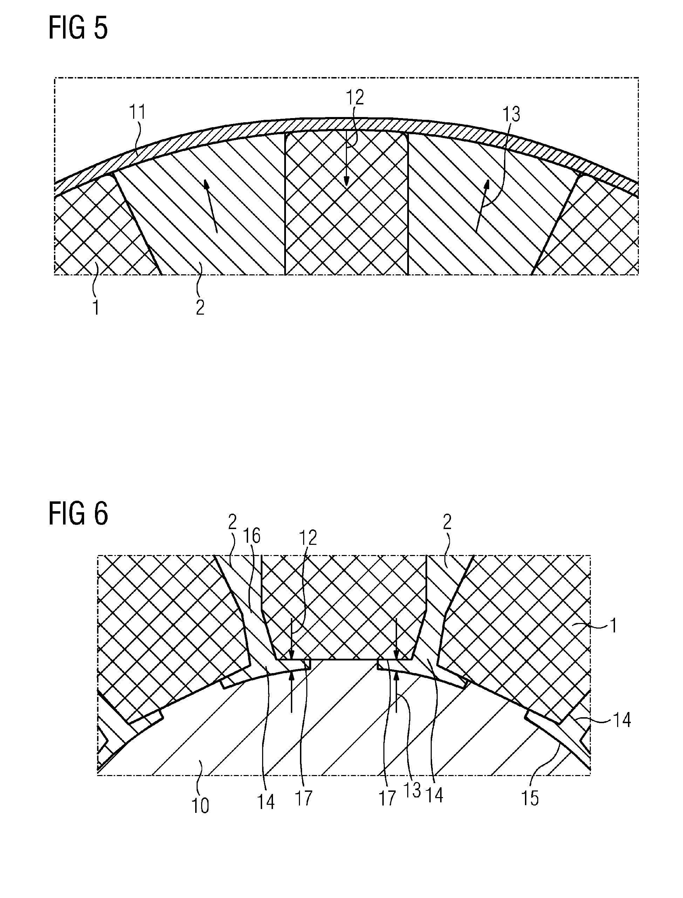

In FIG 5 ist ein Außenabschnitt V von FIG 4 vergrößert dargestellt. Die Nut zur Aufnahme der Bandage bzw. des Rings 11 in den Blechpaketsegmenten 2 reicht bis unter die Oberkante der Permanentmagnete 1. Damit liegt die Bandage bzw. der Ring 11 zumindest auf allen Permanentmagneten 1 auf. Ob der Ring 11 auch auf den Blechpaketsegmenten 2 aufliegt, ist hier nicht von Bedeutung.

Der Ring 11 übt also eine vorgegebene Spannkraft 12 auf die Permanentmagnete 1 aus, die radial nach innen gerichtet ist. Demgegenüber entstehen in den Blechpaketsegmenten Fliehkräfte 13, die radial nach außen gerichtet sind. Natürlich entstehen auch in den Permanentmagneten 1 entsprechende radial nach außen gerichtete Fliehkräfte, die aber direkt von dem Ring 11 aufgenommen werden, der ja direkt auf den Permanentmagneten 1 aufliegt. Die Fliehkräfte 13 der Blechpaketsegmente 2 werden jedoch zum größten Teil oder ausschließlich im Fußbereich der Blechpaketsegmente 2, der der Welle 10 zugewandt ist, auf die Permanentmagnete 1 übertragen.

FIG 6 zeigt hierzu einen Innenabschnitt VI von FIG 4. Es ist zu erkennen, dass die Blechpaketsegmente 2 an dem der Welle 10 zugeordneten Ende jeweils einen Fuß 14 besitzen. Die Unterseite 15 des Fußes 14 ist wesentlich breiter (in Umfangsrichtung) als seine schmalste Stelle 16. An beiden Seiten des Blechpaketsegments 2 liegen die benachbarten Permanentmagnete 1 direkt an. Sie kommen sich damit im Bereich der schmalsten Stelle 16 (ebenfalls bezogen auf die Umfangsrichtung) am nächsten. Dadurch, dass die Unterseite 15 des Fußes 14 wesentlich breiter ist als die schmalste Stelle 16 ergibt sich für das Blechpaketsegment 2 ein Formschluss, der es entgegen der Zentrifugalkraft 13 zwischen den Permanentmagneten 1 hält. Die Flieh- bzw. Zentrifugalkraft 13 wird durch die Spannkraft 12 kompensiert. Die Übertragung der Kräfte von den Blechpaketsegmenten 2 auf die Permanentmagnete 1 erfolgt im Bereich der Füße 14, die eine Auflage 17 für die Magnete 1 bilden. Die Permanentmagnete 1 werden somit als Biegeträger zur radialen Fixierung der Blechpaketsegmente 2 verwendet. Es erfolgt so eine konstante Lastaufnahme der Radialkräfte auf die Permanentmagnete 1.

Die Erreichung eines möglichst geringen Luftspalts zwischen einem Stator und dem Einzelsegmentläufer lässt sich dadurch erreichen, dass die Bandageringe 11 verwendet werden, welche in den Nuten (vgl. FIG 1 und 2) liegen und somit nicht auf den Außendurchmesser auftragen. Außerdem ermöglicht auch der Umstand eine Verringerung des Luftspalts, dass die Bleche mit ihren Füßen 14 (nicht die Magnete 1) definiert auf der Welle 10 aufliegen und somit nur die Welle 10 und die Blechpaketsegmente 2 den Außendurchmesser bestimmen.

Erfindungsgemäß werden also mehrere Merkmale kombiniert. Mit den in Ringnuten verlaufenden ringförmigen Bandageelementen 11, die axial kürzer als die Aktivteillänge sind (< 50%), kann ein kleiner mittlerer Luftspalt realisiert werden. Damit ergibt sich eine höhere Induktion und somit ein höheres Drehmoment oder eine kürzere Baulänge.

Damit alle Einzelbleche radial gehalten werden, müssen sie nicht mehr z. B. mit einer Stanzpaketierung axial verbunden sein. Diese Aufgabe übernehmen die Permanentmagnete, welche als Biegeträger wirken. Damit können entsprechende Fixierelemente für die axiale Fixierung entfallen, was Aussparungen in den Blechpaketsegmenten ermöglicht, mit denen sich die Trägheit verringern lässt.

Eine Klebeschicht zwischen Welle und Permanentmagneten ist nicht mehr notwendig, kann aber optional erfolgen. Durch die Form- und Lagedefinition des gesamten Rotors mittels sehr eng tolerierbarer Bauteile (gedreht und gefräste Welle, gestanzte Blechsegmente) ist eine einfache Fertigung und eine hohe Genauigkeit für die Konzentrizität und Polsymmetrie gegeben, wodurch Pendeldrehmomente, Geräuschentwicklung und Schwingungsanregung reduziert werden.

## Patentansprüche

1. Einzelsegmentläufer mit
- mehreren sternförmig angeordneten Blechpaketsegmenten (2), wobei
- die Blechpaketsegmente (2) jeweils eine Vielzahl an Einzelblechen aufweisen, welche fest miteinander verbunden sind, und mit
- jeweils einem Permanentmagneten (1) zwischen zwei benachbarten der Blechpaketsegmente, wodurch eine hohlzylindrische Anordnung der Blechpaketsegmente und der Permanentmagnete gegeben ist,
**dadurch gekennzeichnet, dass**
- die hohlzylindrische Anordnung an beiden Außenrändern jeweils eine Nut (7, 8; 7', 8') aufweist, und
- in jede Nut ein Ring (11) zur Fixierung der Anordnung eingefügt ist.

2. Einzelsegmentläufer nach Anspruch 1, wobei die hohlzylindrische Anordnung der Blechpaketsegmente (2) und Permanentmagnete (1) in ihrem Inneren durch eine Innenhülse (4) abgestützt ist.

3. Einzelsegmentläufer nach Anspruch 2, wobei die Innenhülse (4) aus einem amagnetischen Material besteht.

4. Einzelsegmentläufer nach einem der vorhergehenden Ansprüche, wobei die Einzelbleche jedes Blechpaketsegments (2) durch Schweißen, Hartlöten oder Kleben miteinander verbunden sind.

5. Einzelsegmentläufer nach Anspruch 1 oder 2, wobei die Einzelbleche jedes Blechpaketsegments (2) stanzpaketiert sind.

6. Einzelsegmentläufer nach einem der vorhergehenden Ansprüche, wobei die Anordnung am Außenmantel in ihrer axialen Mitte ebenfalls eine Nut (7, 8; 7', 8') aufweist, in die ein weiterer Ring (11) eingebracht ist.

7. Einzelsegmentläufer nach einem der vorhergehenden Ansprüche, wobei axial anschließend an die Anordnung (9) und koaxial mit dieser eine weitere gleichartige, ebenfalls mit Ringen fixierte Anordnung (9') von Blechpaketsegmenten (2) und Permanentmagneten (1) angeordnet ist, und wobei in die Nuten (7, 8; 7', 8'), die von beiden Anordnungen aneinander angrenzen, ein gemeinsamer, einteiliger Ring (11) eingefügt ist.

8. Einzelsegmentläufer nach einem der vorhergehenden Ansprüche, wobei die Blechpaketsegmente (2) und Permanentmagnete (1) der Anordnung miteinander verklebt und zusammen auf eine Welle geklebt sind.

9. Einzelsegmentläufer nach einem der vorhergehenden Ansprüche, wobei die Ringe (11) nur auf allen Permanentmagneten (1) der Anordnung aufliegen.

10. Einzelsegmentläufer nach einem der vorhergehenden Ansprüche, wobei die Blechpaketsegmente (2) der Anordnung formschlüssig gegen ihre Zentrifugalkraft an den Permanentmagneten (1) gehalten sind.

11. Einzelsegmentläufer nach Anspruch 10, wobei jedes Blechpaketsegment (2) einen sich über die gesamte axiale Länge der Anordnung erstreckenden Fuß (14) aufweist, der zu seiner Unterseite (15) hin an Breite zunimmt, und wobei mindestens einer der angrenzenden Permanentmagnete (1) unter Bildung des Formschlusses auf den Fuß (14) drückt.
